# EUROPEAN PATENT APPLICATION

(11) **EP 4 254 928 A1**
(43) Date of publication of application: **04.10.2023**
(21) Application number: 22165898.2
(22) Date of filing: 31.03.2022
(51) Int. Cl.: H04N 5/222, H04N 5/225, H04N 5/232, H04N 5/243, G03B 15/03

(54) **APPARATUS AND METHOD FOR PROCESSING AN IMAGE**

(71) Applicant: Infineon Technologies AG, 85579 Neubiberg (DE)
(72) Inventor: PLANK, Hannes, 8010 Graz (AT)
(74) Representative: 2SPL Patentanwälte PartG mbB

(57) **Abstract**

An apparatus for processing an image is provided. The image includes a first plurality of pixels depicting a scene. The apparatus includes interface circuitry configured to receive a depth image of the scene. The depth image includes a second plurality of pixels indicating a respective distance to the scene. Additionally, the apparatus includes processing circuitry configured to determine a respective depth value for the first plurality of pixels based on the depth image. The processing circuitry is further configured to modify a respective brightness of the first plurality of pixels based on the respective depth value to generate a processed image.

## Description

### Field

The present disclosure relates to image processing. In particular, examples of the present disclosure relate to an apparatus and a method for processing an image.

### Background

Cameras with high image fidelity are desired for may applications such as in mobile phones. In low-light conditions, a flash is usually required, but produces rather unaesthetic images as the foreground is brighter than the background. It is desired to provide images with a more suitable illumination (e.g. close objects should not be overexposed).

Furthermore, object detection systems usually work with contrasts and edges in the images. It is therefore desired to provide an image which represents values proportional to the object reflectance. However, the light intensity and the color of an object in the image depend on the illumination.

In summary, there may be a demand for image processing that allows to overcome the above shortcomings.

### Summary

This demand is met by the subject-matter of the independent claims. Advantageous embodiments are addressed by the dependent claims.

According to a first aspect, the present disclosure provides an apparatus for processing an image. The image comprises a first plurality of pixels depicting a scene. The apparatus comprises interface circuitry configured to receive a depth image of the scene. The depth image comprises a second plurality of pixels indicating a respective distance to the scene. Additionally, the apparatus comprises processing circuitry configured to determine a respective depth value for the first plurality of pixels based on the depth image. The processing circuitry is further configured to modify a respective brightness of the first plurality of pixels based on the respective depth value to generate a processed image.

According to a second aspect, the present disclosure provides a method for processing an image. The image comprises a first plurality of pixels depicting a scene. The method comprises receiving a depth image of the scene. The depth image comprises a second plurality of pixels indicating a respective distance to the scene. Additionally, the method comprises determining a respective depth value for the first plurality of pixels based on the depth image. The method further comprises modifying a respective brightness of the first plurality of pixels based on the respective depth value to generate a processed image.

### Brief description of the Figures

Some examples of apparatuses and/or methods will be described in the following by way of example only, and with reference to the accompanying figures, in which
Fig. 1 illustrates an example of an apparatus for processing an image;
Fig. 2 illustrates a first exemplary data and process flow;
Fig. 3 illustrates a second exemplary data and process flow; and
Fig. 4 illustrates a flowchart of an example of a method for processing an image.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

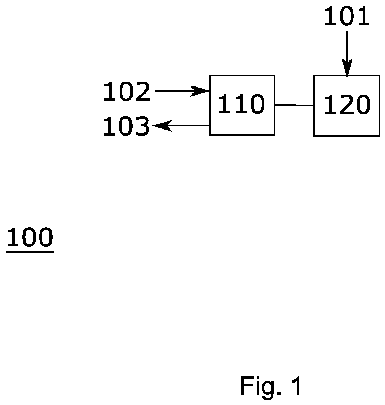

Fig. 1 illustrates an exemplary apparatus 100 for processing an (e.g. two-dimensional) image 101. The image 101 may be taken by a first imaging device exhibiting a first (e.g. two-dimensional) image space such as a color camera, a black & white camera or an infrared camera. The first image space is a (e.g. two-dimensional) optical space coordinatizing the visual representation the scene by the first imaging device. The first image space may be understood as an image plane of the first imaging device that comprises the scene's projected image such as a plane of an image sensor of the first imaging device.

The image 101 comprises a first plurality of pixels (i.e. two or more pixels) depicting a scene. The first plurality of pixels form a raster image of the scene, wherein the pixels are the smallest addressable elements in the raster image. Each pixel in the image 101 is a data structure holding predefined channels for indicating a color and a brightness (intensity) of the pixel. For example, the channels may be determined according to a color model such as the Red Green Blue (RGB) color model, the Cyan Magenta Yellow Key (CMYK) color model or the Hue Saturation Value (HSV) color model. For example, the image 101 may be one of a color image captured with flash illumination (e.g. by using one or more bright Light Emitting Diode, LED), a black & white image captured with flash illumination and an infrared image.

The apparatus 100 comprises interface circuitry 110 configured to receive a (e.g. two-dimensional) depth image 102 of the scene. The second image 102 may be taken by a second imaging device exhibiting a second (e.g. two-dimensional) image space such as a depth camera (e.g. Time-of-Flight, ToF, camera) or a stereoscopic camera. The second image space is a (e.g. two-dimensional) optical space coordinatizing the visual representation the scene by the second imaging device. The second image space may be understood as an image plane of the second imaging device that comprises the scene's projected image such as a plane of an image sensor of the second imaging device.

The depth image 102 comprises a second plurality of pixels indicating a respective distance to the scene. Also the second plurality of pixels form a raster image of the scene, wherein the pixels are again the smallest addressable elements in the raster image. For example, the distances indicated by the second plurality of pixels may either be a respective vertical distance of the second image space to a respective object in the scene (i.e. assuming that all pixels look in parallel directions) or be a respective physical distance of the respective pixel to the respective object in the scene (i.e. assuming a point-like camera with directivity such that all pixels look in different directions).

Additionally, the apparatus 100 comprises processing circuitry 120 coupled to the interface circuitry 110. For example, the processing circuitry 120 may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA). The processing circuitry 120 may optionally be coupled to, e.g., read only memory (ROM) for storing software, random access memory (RAM) and/or non-volatile memory. The processing circuitry 120 is configured to process the image 101 based on the depth image 102. In particular, the processing circuitry 120 is configured to determine a respective depth value for the first plurality of pixels based on the depth image 102. The processing circuitry 120 is further configured to modify a respective brightness of the first plurality of pixels based on the respective depth value to generate a processed image 103.

By modifying the respective brightness of the first plurality of pixels based on the respective depth value, the apparatus 100 may allow to compensate for distance dependent brightness effects in the image 101. For example, if the image 101 is captured with flash illumination, the scene is mostly (predominantly) illuminated by the flashlight. Modifying the respective brightness of the first plurality of pixels based on the respective depth value may allow to compensate (correct) for overexposure of closer (nearer) parts of the depicted scene as the brightness of the respective pixel linearly scales with the amount of received light. Accordingly, the processed image 103 may exhibit a more suitable illumination than the image 101 as close objects in the depicted scene are no longer overexposed, i.e. are no longer too bright. For example, the respective brightness of the pixels in the processed image 103 may correspond to the reflectivity of the respective object depicted by the respective pixel. Accordingly, the apparatus 100 may allow to increase a visual fidelity of the depicted scene.

For modifying the respective brightness of the first plurality of pixels, the processing circuitry 120 may, e.g., be configured to modify the respective brightness of the first plurality of pixels using a depth dependent modification function which receives the respective depth value as input. In general, the depth dependent modification function may exhibit any shape. For example, the respective brightness of the first plurality of pixels may be modified by a respective distance dependent factor and/or offset.

The depth dependent modification function may, e.g., be configured to scale the respective brightness of the first plurality of pixels with a respective scaling value. The respective scaling value may be the squared value of the respective depth value. Using the squared value of the respective depth value as the respective scaling value may allow to provide a substantially normalized brightness for foreground and background objects in the scene as the light intensity scales according to the inverse square law. Accordingly, objects in the foreground are no longer overexposed and, hence, too bright in the processed image 103. The respective brightness of the pixels in the processed image 103 substantially corresponds to the reflectivity of the respective object depicted by the respective pixel.

The depth dependent modification function may, e.g., be implemented as a Look-Up Table (LUT), which is stored in a memory of the processing circuitry 120 or a separate memory of the apparatus 100 accessible by the processing circuitry 120. Accordingly, the processing circuitry 120 may be configured to select the respective scaling value based on the respective depth value in the LUT. Implementing the depth dependent modification function as a LUT may allow to implement the depth dependent modification function in a highly efficient manner. For example, the LUT may store a plurality of different possible scaling values, which are indexed for different possible distances. Accordingly, the processing circuitry 120 can select the respective scaling value for the respective pixel of the first plurality of pixels by selecting the one of the plurality of different possible scaling values whose index matches the respective depth value for the respective pixel of the first plurality of pixels.

According to examples, the depth dependent modification function may be configured to (exclusively) modify only channels of the respective pixel of the first plurality of pixels which determine the brightness of the respective pixel. For example, if the first plurality of pixels are according the RGB color model, the brightness of the respective pixel depends on each of the R channel, the G channel and the B channel. Accordingly, the depth dependent modification function may be configured to modify each of the R channel, the G channel and the B channel based on the respective depth value. On the other hand, if the first plurality of pixels are according the HSV color model, the brightness of the respective pixel depends on only the V channel. Accordingly, the depth dependent modification function may be configured to modify only the V channel. That is, the depth dependent modification function may be configured to not modify H channel and the S channel. By modifying only channels of the respective pixel of the first plurality of pixels which determine the brightness of the respective pixel, the processing of the image 101 may be performed in a highly efficient manner.

According to examples, the processing circuitry 120 may optionally be configured to further apply a photographic effect to the respective pixel of the first plurality of pixels if the respective depth value satisfies a predefined criterion. For example, only pixels for which the respective depth value is within a certain (predefined) distance range may be rendered with colors, whereas the pixels for which the respective depth value is outside (i.e. not within) the distance range may be rendered black & white. This may, e.g., allow to render depicted objects at a certain distance in color, while the background is rendered black & white in the processed image 103. However, it is to be noted that the above example is merely for illustrative purposes. Other photographic effects may be applied as well. For example, a blurri-ness may be increased for pixels whose depth value is within or outside a certain (predefined) distance range such that only objects outside or within the distance range are sharp in the processed image 103. In other examples, the color of pixels whose depth value is within or outside a certain (predefined) distance range may be changed to white such that only objects outside or within the distance range are visible in the processed image 103.

As described above, the first plurality of pixels are located in the first image space, which is an image space of the first imaging device used for capturing the image 101. Similarly, the second plurality of pixels are located in the second image space, which is an image space of the second imaging device used for capturing the depth image 102. For determining the respective depth value for the first plurality of pixels, the processing circuitry 120 is configured to map pixel positions of the second plurality of pixels in the second image space to pixel positions in the first image space. In other words, the depth image 102 is mapped into the image space of the image 101. By mapping the depth image 102 into the image space of the image 101, the distance data of the depth image 102 is associated with the image 101 such that the distance for each pixel in the image 101 is available.

The second plurality of pixels may comprise the same number of pixels as the first plurality of pixels. In other words, the depth image 102 may exhibit the same resolution as the image 101. In this case, mapping the depth image 102 into the image space of the image 101 may be sufficient for obtaining a respective distance value for each of the first plurality of pixels. However, after mapping the depth image 102 into the image space of the image 101, the processing circuitry 120 may optionally further be configured to perform filtering processing on the second plurality of pixels in the first image space to obtain a quality-enhanced, updated depth image. The updated depth image comprises a third plurality of pixels each indicating the respective depth value for the first plurality of pixels. The third plurality of pixels comprises the same number of pixels as the first plurality of pixels. In other words, also the updated depth image exhibits the same resolution as the first image.

In other examples, the second plurality of pixels may comprise less pixels than the first plurality of pixels. In other words, the depth image 102 may exhibit a lower resolution than the image 101. In this case, after mapping the depth image 102 into the image space of the image 101, the processing circuitry 120 may further be configured to perform at least one of filtering processing and upscaling processing on the second plurality of pixels in the first image space to obtain a quality-enhanced, updated depth image comprising a third plurality of pixels each indicating the respective depth value for the first plurality of pixels. The third plurality of pixels comprises the same number of pixels as the first plurality of pixels. In other words, the updated depth image exhibits the same resolution as the first image.

According to some examples, trained machine-learning models may be used for the filtering processing and/or the upscaling processing. However, the present disclosure is not limited thereto.

An exemplary method for image-aware filtering processing and upscaling processing is presented in document H. Plank et al., "High performance Time-of-Flight and color sensor fusion with image-guided depth super resolution," 2016 Design, Automation & Test in Europe Conference & Exhibition (DATE), 2016, pp. 1213-1218, the content of which is incorporated herein by reference. However, it is to be known that other methods and techniques for filtering processing and/or upscaling processing may be used as well. Irrespective of which methods and techniques are used for filtering processing and/or upscaling processing, an updated depth image (of the same size as the image 101) is obtained, which provides a respective distance value for each of the first plurality of pixels in the image 101.

The above mentioned document by H. Plank et al. further provides an exemplary method for mapping pixels from one image space to another. This method may be used by the processing circuitry 120 for mapping the second plurality of pixels to the first image space. In particular, the processing circuitry 120 may be configured to determine for the second plurality of pixels a respective three-dimensional position in a three-dimensional coordinate system of the second imaging device based on the respective pixel position in the second image space and the respectively indicated distance. That is, for each of the second plurality of pixels, the respective pixel position in the second image space and the distance indicated by the respective pixel is translated into a respective three-dimensional position in the three-dimensional coordinate system of the second imaging device. In other words, the three-dimensional position of each depth pixel in the three-dimensional space of the second imaging device (e.g. a depth camera) is calculated. Further, the processing circuitry 120 may be configured to transform the respective three-dimensional position in the three-dimensional coordinate system of the second imaging device to a respective three-dimensional position in a three-dimensional coordinate system of the first imaging device. In other words, the three-dimensional position of each depth pixel in the three-dimensional space of the second imaging device is transformed into the three-dimensional space of the first imaging device (e.g. a color camera). Additionally, the processing circuitry 120 may be configured to project the respective three-dimensional position in the three-dimensional coordinate system of the first imaging device to the first image space to obtain the pixel positions of the second plurality of pixels in the first image space. In other words, the three-dimensional position of each depth pixel in the three-dimensional space of the first imaging device is mapped to the image plane of the first imaging device. Further details on the individual steps for the mapping the second plurality of pixels to the first image space are given in the above mentioned document by H. Plank et al.

The above described image processing may be applied to the image 101 at any stage. For example, the image 101 may unprocessed pixel data of an image sensor or processed pixel data. In other words, the described image processing may be applied to raw RGB (or whatever Bayer matrix is used), CMYK, HSV, etc. data or on resulting pixel data. In particular, the image 101 may be a single photograph (i.e. an image created by light falling on a photosensitive surface such as a photographic film or an image sensor) or a still frame of a recorded video (i.e. a single static image taken from a series of recorded still images forming the recorded video). The image 101 may, e.g., be received by the interface circuitry 110 from the first imaging device or a memory external to the apparatus 100.

In other examples, the processing circuitry 120 may be configured to generate the image 101 by performing image averaging processing on a plurality of input images. Similar to what is described above, the plurality of input images may, e.g., be received by the interface circuitry 110 from the first imaging device or a memory external to the apparatus 100. Image averaging processing on a plurality of input images depicting the same scene allows to remove noise and, hence, improve the Signal-to-Noise Ratio (SNR) of the image 101 compared to the plurality of input images. Various methods and techniques are known for image averaging a plurality of images. The present disclosure is not limited to a specific method or technique for image averaging.

It is to be noted that not only the image 101 may be related to image averaging processing. Also the processed image 103 may be subject to image averaging processing. The processing circuitry 120 may in some examples be configured to perform image averaging processing on the processed image 103 and at least one further image to generate an averaged image. For example, the processing circuitry 120 may be configured to perform image averaging processing on the processed image 103 and at least one previously generated processed image to generate an averaged image. In other words, the proposed image processing for brightness correction may be repeated multiple times for different images and the resulting processed images may be averaged (combined) to a single image with improved SNR

In other examples, the processing circuitry 120 may be configured to generate the image 101 by performing image subtraction of a first (input) image from a second (input) image. In this example, the first image is captured without flash illumination, whereas the second image is captured with flash illumination. Various methods and techniques are known for image subtraction of two images. The present disclosure is not limited to a specific method or technique for image subtraction. The depicted scene need not only be illuminated by flash illumination but also by other light sources in the ambience of the scene. The light sources in the ambience of the scene may be disturbing and, hence be unwanted. The additional image subtraction may allow to remove illumination effects by the unwanted light sources in the ambience of the scene.

The interface circuitry 110 may optionally be configured to output the processed image 103. In some examples, the processing circuitry 120 may be further configured to derive another image from the processed image 103 (e.g. by applying further image processing to the processed image 103 such as the above described application of one or more photographic effect or the above described image averaging) and the interface circuitry 110 may accordingly be configured to output the image derived from the processed image 103.

According to some examples, the processing circuitry 120 may further be configured to perform at least one of object identification processing and object classification processing on the processed image 103 or an image derived therefrom (e.g. obtained by the above described image averaging). Object identification processing and object classification processing are two sub-steps of object detection performed by machine (computer) vision systems. Object identification processing and object classification processing allow to detect instances of semantic objects of a certain class (such as humans, buildings, or cars) in an image. For example, the processing circuitry 120 may perform object identification processing and object classification processing on the processed image 103 or an image derived therefrom to detect a predetermined face or a predetermined material. Accordingly, the apparatus 100 may additionally provide an improved face recognition and/or material recognition functionality since the processed image 103 or an image derived therefrom are corrected for overexposure of the depicted scene. Various methods and techniques are known for object identification and object classification. The present disclosure is not limited to a specific method or technique for object identification and object classification.

It is to be noted that according to some examples, the processing circuitry 120 may further be configured to perform additional image processing on the processed image 103 such as gamma correction, demosaicing, blending with an ambient color image, etc.

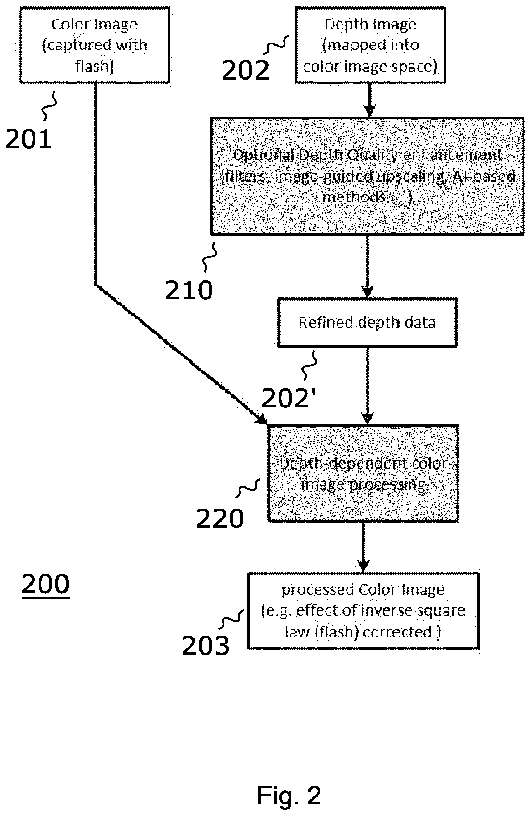

**Fig. 2** illustrates an exemplary data and process flow 200 according to the present disclosure. As can be seen from Fig. 2, a color image 201 of a scene captured with flash illumination is provided. Furthermore, a depth image 202 of the scene which is mapped to the image plane (space) of the imaging device used for capturing the color image 201 is provided. The depth image 202 may optionally undergo quality enhancement processing 210 such as the above described filtering processing and/or the upscaling processing. Accordingly, refined depth data 202' such as an updated depth image may be obtained.

Subsequently, the respective brightness of the pixels in the color image 201 is modified based on the depth image 202 or the refined depth data 202' according to the above described image processing 220 to obtain a processed color image 203. For example, analogously to what is described above, overexposure of the parts of the depicted scene due to the flash illumination may be compensated.

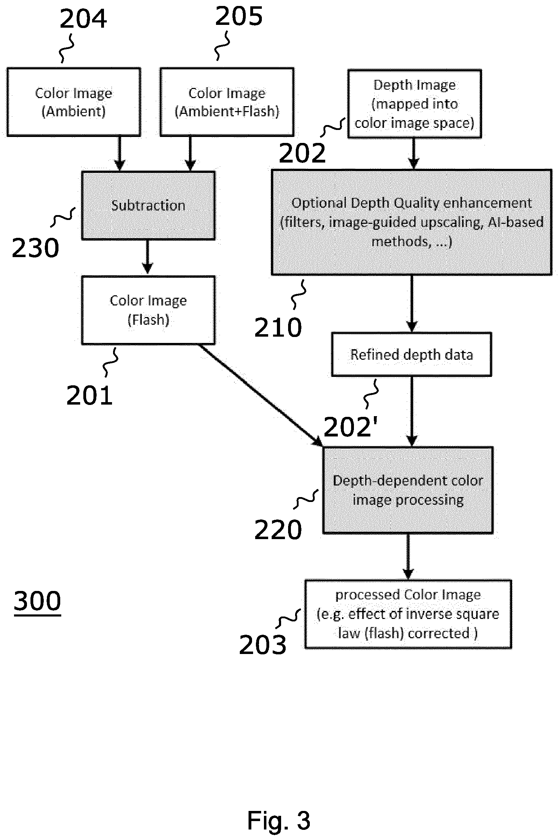

As described above, the image subject to the brightness correction may be obtained by image subtraction. **Fig. 3** illustrates an exemplary data and process flow 300 according to the present disclosure. The data and process flow 300 is based on the above described data and process flow 200. The data and process flow 300 additionally comprises the image subtraction 230 of a first color image 204 of the scene captured without flash illumination from a second color image 205 of the scene captured with flash illumination. In both color images 204 and 205, the scene is illuminated by light sources in the ambience of the scene. Due to the image subtraction, the illumination by light sources in the ambience of the scene may be removed from the resulting color image 201. The remaining processing is as described above for the data and process flow 200.

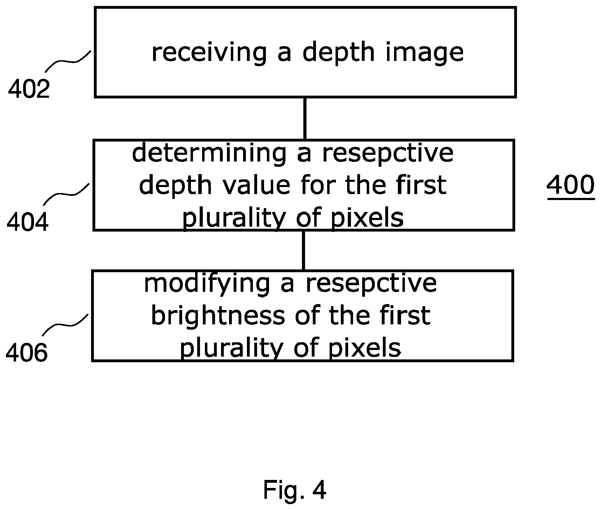

Summarizing the above, **Fig. 4** further illustrates a flowchart of an example of a (e.g. computer-implemented) method 400 for processing an image. The image comprises a first plurality of pixels depicting a scene. The method 400 comprises receiving 402 a depth image of the scene. The depth image comprises a second plurality of pixels indicating a respective distance to the scene. Additionally, the method 400 comprises determining 404 a respective depth value for the first plurality of pixels based on the depth image. The method 400 further comprises modifying 406 a respective brightness of the first plurality of pixels based on the respective depth value to generate a processed image.

Similar what is described above, the method 400 may allow to compensate for distance dependent brightness effects in the image. Accordingly, the method 400 may allow to increase a visual fidelity of the depicted scene.

More details and aspects of the method 400 are explained in connection with the proposed technique or one or more example described above. The method 400 may comprise one or more additional optional features corresponding to one or more aspects of the proposed technique or one or more example described above.

Aspects of the present disclosure may allow virtual photo (image) illumination based on, e.g., an RGB-D (red, green, blue - depth) capture of a scene.

The examples as described herein may be summarized as follows:
Example 1 is an apparatus for processing an image. The image comprises a first plurality of pixels depicting a scene. The apparatus comprises interface circuitry configured to receive a depth image of the scene. The depth image comprises a second plurality of pixels indicating a respective distance to the scene. Additionally, the apparatus comprises processing circuitry configured to determine a respective depth value for the first plurality of pixels based on the depth image. The processing circuitry is further configured to modify a respective brightness of the first plurality of pixels based on the respective depth value to generate a processed image.
Example 2 is the apparatus of example 1, wherein, for determining the respective depth value for the first plurality of pixels, the processing circuitry is configured to map pixel positions of the second plurality of pixels in a second image space of a second imaging device used for capturing the depth image to pixel positions in a first image space of a first imaging device used for capturing the image, wherein the first plurality of pixels are located in the first image space.
Example 3 is the apparatus of example 2, wherein, for mapping the second plurality of pixels to the first image space, the processing circuitry is configured to: determine for the second plurality of pixels a respective three-dimensional position in a three-dimensional coordinate system of the second imaging device based on the respective pixel position in the second image space and the respectively indicated distance; transform the respective three-dimensional position in the three-dimensional coordinate system of the second imaging device to a respective three-dimensional position in a three-dimensional coordinate system of the first imaging device; and project the respective three-dimensional position in the three-dimensional coordinate system of the first imaging device to the first image space to obtain the pixel positions of the second plurality of pixels in the first image space.
Example 4 is the apparatus of example 2 or example 3, wherein, for determining the respective depth value for the first plurality of pixels, the processing circuitry is further configured to perform at least one of filtering processing and upscaling processing on the second plurality of pixels in the first image space to obtain an updated depth image comprising a third plurality of pixels each indicating the respective depth value for the first plurality of pixels.
Example 5 is the apparatus of example 4, wherein the third plurality of pixels comprises the same number of pixels as the first plurality of pixels.
Example 6 is the apparatus of any one of examples 1 to 5, wherein, for modifying the respective brightness of the first plurality of pixels, the processing circuitry is configured to modify the respective brightness of the first plurality of pixels using a depth dependent modification function which receives the respective depth value as input.
Example 7 is the apparatus of example 6, wherein the depth dependent modification function is configured to scale the respective brightness of the first plurality of pixels with a respective scaling value.
Example 8 is the apparatus of example 7, wherein the respective scaling value is the squared value of the respective depth value.
Example 9 is the apparatus of any one of examples 6 to 8, wherein the depth dependent modification function is implemented as a look-up table, and wherein the processing circuitry is configured to select the respective scaling value based on the respective depth value in the look-up table.
Example 10 is the apparatus of any one of examples 6 to 9, wherein the depth dependent modification function is configured to modify only channels of the respective pixel of the first plurality of pixels which determine the brightness of the respective pixel.
Example 11 is the apparatus of any one of examples 1 to 10, wherein the processing circuitry is configured to further apply a photographic effect to the respective pixel of the first plurality of pixels if the respective depth value satisfies a predefined criterion.
Example 12 is the apparatus of any one of examples 1 to 11, wherein the image is one of a color image captured with flash illumination, a black & white image captured with flash illumination and an infrared image.
Example 13 is the apparatus of any one of examples 1 to 11, wherein the processing circuitry is configured to generate the image by performing image averaging processing on a plurality of input images.
Example 14 is the apparatus of any one of examples 1 to 11, wherein the processing circuitry is configured to generate the image by performing image subtraction of a first image from a second image, wherein the first image is captured without flash illumination, and wherein the second image is captured with flash illumination.
Example 15 is the apparatus of any one of examples 1 to 14, wherein the processing circuitry is configured to perform image averaging processing on the processed image and at least one previously generated processed image to generate an averaged image.
Example 16 is the apparatus of any one of examples 1 to 15, wherein the interface circuitry is further configured to output the processed image or an image derived therefrom.
Example 17 is the apparatus of any one of examples 1 to 15, wherein the processing circuitry is further configured to perform at least one of object identification processing and object classification processing on the processed image or an image derived therefrom.
Example 18 is a method for processing an image. The image comprises a first plurality of pixels depicting a scene. The method comprises receiving a depth image of the scene. The depth image comprises a second plurality of pixels indicating a respective distance to the scene. Additionally, the method comprises determining a respective depth value for the first plurality of pixels based on the depth image. The method further comprises modifying a respective brightness of the first plurality of pixels based on the respective depth value to generate a processed image.
Example 19 is a non-transitory machine-readable medium having stored thereon a program having a program code for performing the method according to example 18, when the program is executed on a processor or a programmable hardware.
Example 20 is a program having a program code for performing the method according to example 18, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) for processing an image (101), wherein the image (101) comprises a first plurality of pixels depicting a scene, the apparatus (100) comprising:
interface circuitry (110) configured to receive a depth image (102) of the scene, wherein the depth image (102) comprises a second plurality of pixels indicating a respective distance to the scene; and
processing circuitry (120) configured to:
determine a respective depth value for the first plurality of pixels based on the depth image (102); and
modify a respective brightness of the first plurality of pixels based on the respective depth value to generate a processed image (103).

2. The apparatus (100) of claim 1, wherein, for determining the respective depth value for the first plurality of pixels, the processing circuitry (120) is configured to:
map pixel positions of the second plurality of pixels in a second image space of a second imaging device used for capturing the depth image (102) to pixel positions in a first image space of a first imaging device used for capturing the image (101), wherein the first plurality of pixels are located in the first image space.

3. The apparatus (100) of claim 2, wherein, for mapping the second plurality of pixels to the first image space, the processing circuitry (120) is configured to:
determine for the second plurality of pixels a respective three-dimensional position in a three-dimensional coordinate system of the second imaging device based on the respective pixel position in the second image space and the respectively indicated distance;
transform the respective three-dimensional position in the three-dimensional coordinate system of the second imaging device to a respective three-dimensional position in a three-dimensional coordinate system of the first imaging device; and
project the respective three-dimensional position in the three-dimensional coordinate system of the first imaging device to the first image space to obtain the pixel positions of the second plurality of pixels in the first image space.

4. The apparatus (100) of claim 2 or claim 3, wherein, for determining the respective depth value for the first plurality of pixels, the processing circuitry (120) is further configured to perform at least one of filtering processing and upscaling processing on the second plurality of pixels in the first image space to obtain an updated depth image comprising a third plurality of pixels each indicating the respective depth value for the first plurality of pixels.

5. The apparatus (100) of claim 4, wherein the third plurality of pixels comprises the same number of pixels as the first plurality of pixels.

6. The apparatus (100) of any one of claims 1 to 5, wherein, for modifying the respective brightness of the first plurality of pixels, the processing circuitry (120) is configured to modify the respective brightness of the first plurality of pixels using a depth dependent modification function which receives the respective depth value as input.

7. The apparatus (100) of claim 6, wherein the depth dependent modification function is configured to scale the respective brightness of the first plurality of pixels with a respective scaling value.

8. The apparatus (100) of claim 7, wherein the respective scaling value is the squared value of the respective depth value.

9. The apparatus (100) of any one of claims 6 to 8, wherein the depth dependent modification function is implemented as a look-up table, and wherein the processing circuitry (120) is configured to select the respective scaling value based on the respective depth value in the look-up table.

10. The apparatus (100) of any one of claims 6 to 9, wherein the depth dependent modification function is configured to modify only channels of the respective pixel of the first plurality of pixels which determine the brightness of the respective pixel.

11. The apparatus (100) of any one of claims 1 to 10, wherein the processing circuitry (120) is configured to further apply a photographic effect to the respective pixel of the first plurality of pixels if the respective depth value satisfies a predefined criterion.

12. The apparatus (100) of any one of claims 1 to 11, wherein the processing circuitry (120) is configured to generate the image (101) by performing image averaging processing on a plurality of input images.

13. The apparatus (100) of any one of claims 1 to 11, wherein the processing circuitry (120) is configured to generate the image (101) by performing image subtraction of a first image from a second image, wherein the first image is captured without flash illumination, and wherein the second image is captured with flash illumination.

14. The apparatus (100) of any one of claims 1 to 13, wherein the processing circuitry (120) is configured to perform image averaging processing on the processed image (103) and at least one previously generated processed image (103) to generate an averaged image.

15. A method (400) for processing an image, wherein the image comprises a first plurality of pixels depicting a scene, the method comprising:
receiving (402) a depth image of the scene, wherein the depth image comprises a second plurality of pixels indicating a respective distance to the scene;
determining (404) a respective depth value for the first plurality of pixels based on the depth image; and
modifying (406) a respective brightness of the first plurality of pixels based on the respective depth value to generate a processed image.

## Amended claims

### Amended claims in accordance with Rule 137(2) EPC.

1. An apparatus (100) for processing an image (101), wherein the image (101) comprises a first plurality of pixels depicting a scene, the apparatus (100) comprising:
interface circuitry (110) configured to receive a depth image (102) of the scene, wherein the depth image (102) comprises a second plurality of pixels indicating a respective distance to the scene; and
processing circuitry (120) configured to:
determine a respective depth value for the first plurality of pixels based on the depth image (102); and
modify a respective brightness of the first plurality of pixels based on the respective depth value to generate a processed image (103),
wherein, for determining the respective depth value for the first plurality of pixels, the processing circuitry (120) is configured to:
map pixel positions of the second plurality of pixels in a second image space of a second imaging device used for capturing the depth image (102) to pixel positions in a first image space of a first imaging device used for capturing the image (101), wherein the first plurality of pixels are located in the first image space; and
perform at least one of filtering processing and upscaling processing on the second plurality of pixels in the first image space to obtain an updated depth image comprising a third plurality of pixels each indicating the respective depth value for the first plurality of pixels.

2. The apparatus (100) of claim 1, wherein, for mapping the second plurality of pixels to the first image space, the processing circuitry (120) is configured to:
determine for the second plurality of pixels a respective three-dimensional position in a three-dimensional coordinate system of the second imaging device based on the respective pixel position in the second image space and the respectively indicated distance;
transform the respective three-dimensional position in the three-dimensional coordinate system of the second imaging device to a respective three-dimensional position in a three-dimensional coordinate system of the first imaging device; and
project the respective three-dimensional position in the three-dimensional coordinate system of the first imaging device to the first image space to obtain the pixel positions of the second plurality of pixels in the first image space.

3. The apparatus (100) of claim 1 or claim 2, wherein the third plurality of pixels comprises the same number of pixels as the first plurality of pixels.

4. The apparatus (100) of any one of claims 1 to 3, wherein, for modifying the respective brightness of the first plurality of pixels, the processing circuitry (120) is configured to modify the respective brightness of the first plurality of pixels using a depth dependent modification function which receives the respective depth value as input.

5. The apparatus (100) of claim 6, wherein the depth dependent modification function is configured to scale the respective brightness of the first plurality of pixels with a respective scaling value.

6. The apparatus (100) of claim 5, wherein the respective scaling value is the squared value of the respective depth value.

7. The apparatus (100) of any one of claims 4 to 6, wherein the depth dependent modification function is implemented as a look-up table, and wherein the processing circuitry (120) is configured to select the respective scaling value based on the respective depth value in the look-up table.

8. The apparatus (100) of any one of claims 4 to 7, wherein the depth dependent modification function is configured to modify only channels of the respective pixel of the first plurality of pixels which determine the brightness of the respective pixel.

9. The apparatus (100) of any one of claims 1 to 8, wherein the processing circuitry (120) is configured to further apply a photographic effect to the respective pixel of the first plurality of pixels if the respective depth value satisfies a predefined criterion.

10. The apparatus (100) of any one of claims 1 to 9, wherein the image (101) is one of a color image captured with flash illumination, a black & white image captured with flash illumination and an infrared image.

11. The apparatus (100) of any one of claims 1 to 9, wherein the processing circuitry (120) is configured to generate the image (101) by performing image averaging processing on a plurality of input images.

12. The apparatus (100) of any one of claims 1 to 9, wherein the processing circuitry (120) is configured to generate the image (101) by performing image subtraction of a first image from a second image, wherein the first image is captured without flash illumination, and wherein the second image is captured with flash illumination.

13. The apparatus (100) of any one of claims 1 to 12, wherein the processing circuitry (120) is configured to perform image averaging processing on the processed image (103) and at least one previously generated processed image (103) to generate an averaged image.

14. A method (400) for processing an image, wherein the image comprises a first plurality of pixels depicting a scene, the method comprising:
receiving (402) a depth image of the scene, wherein the depth image comprises a second plurality of pixels indicating a respective distance to the scene;
determining (404) a respective depth value for the first plurality of pixels based on the depth image; and
modifying (406) a respective brightness of the first plurality of pixels based on the respective depth value to generate a processed image,
wherein determining (404) the respective depth value for the first plurality of pixels comprises:
mapping pixel positions of the second plurality of pixels in a second image space of a second imaging device used for capturing the depth image to pixel positions in a first image space of a first imaging device used for capturing the image, wherein the first plurality of pixels are located in the first image space; and
perform at least one of filtering processing and upscaling processing on the second plurality of pixels in the first image space to obtain an updated depth image comprising a third plurality of pixels each indicating the respective depth value for the first plurality of pixels.

15. A program having a program code for performing the method according to claim 14, when the program is executed on a processor or a programmable hardware.
